(19) **Europäisches Patentamt**
**European Patent Office**
**Office européen des brevets**

(11) **EP 2 684 399 B1**

(12) **EUROPEAN PATENT SPECIFICATION**

(45) Date of publication and mention
of the grant of the patent:
**09.05.2018 Bulletin 2018/19**

(51) Int Cl.:
*H04L 27/00* (2006.01)  *H04W 52/08* (2009.01)
*H04W 52/10* (2009.01)  *H04W 52/34* (2009.01)
*H04W 52/02* (2009.01)  *H04W 52/26* (2009.01)
*H04L 1/00* (2006.01)  *H04W 84/18* (2009.01)
*H04W 24/10* (2009.01)  *H04W 84/12* (2009.01)

(21) Application number: **12757138.8**

(22) Date of filing: **10.03.2012**

(86) International application number:
**PCT/US2012/028662**

(87) International publication number:
**WO 2012/125511 (20.09.2012 Gazette 2012/38)**

(54) **FAST LINK ADAPTATION AND TRANSMIT POWER CONTROL IN WIRELESS NETWORKS**

SCHNELLE VERKNÜPFUNGSANPASSUNG UND ÜBERTRAGUNGSLEISTUNGSSTEUERUNG IN
DRAHTLOSEN NETZWERKEN

ADAPTATION RAPIDE DE LA LIAISON ET COMMANDE DE LA PUISSANCE D'ÉMISSION DANS
DES RÉSEAUX SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2011 US 201161452056 P**

(43) Date of publication of application:
**15.01.2014 Bulletin 2014/03**

(73) Proprietor: **MediaTek Singapore Pte. Ltd.
Singapore 138628 (SG)**

(72) Inventors:
• **LIU, Jianhan
San Jose, CA 95131 (US)**
• **WANG, James
San Marino, CA 91108 (US)**
• **YE, Huanhun
Cupertino, CA 95014 (US)**
• **HSU, Yungping
Taipei City 106 (TW)**

(74) Representative: **2K Patentanwälte Blasberg
Kewitz & Reichel
Partnerschaft mbB
Schumannstrasse 27
60325 Frankfurt am Main (DE)**

(56) References cited:
**US-A1- 2005 030 976    US-A1- 2005 128 970
US-A1- 2007 268 859    US-A1- 2007 268 859
US-A1- 2007 291 829    US-A1- 2008 080 437
US-A1- 2010 128 762    US-A1- 2011 039 568
US-B2- 7 245 879**

• **N/A: "Joint Proposal Mac Specification ;
11-05-1095-02-000n-joint-proposal-mac-spec
ification", IEEE DRAFT;
11-05-1095-02-000N-JOINT-PROPOSAL-MAC-SP
ECIFICATION, IEEE-SA MENTOR, PISCATAWAY,
NJ USA, vol. 802.11n, no. 2, 17 November 2005
(2005-11-17), pages 1-37, XP017688321,
[retrieved on 2005-11-17]**

**Description**

CROSS REFERENCE TO RELATED APPLICATIONS

This application claims priority under 35 U.S.C. §119 from U.S. Provisional Application Number 61/452,056, entitled "Methods of Fast Link Adaptation and Transmit Power Control in Wireless Smart Metering/Sensor Networks," filed on March 11, 2011.

TECHNICAL FIELD

The disclosed embodiments relate generally to wireless network communications, and, more particularly, to fast link adaptation and transmit power control in wireless communications systems.

BACKGROUND

Many applications demand efficient and low-cost approaches for large-scale information collection and distribution. For example, reading electrical/gas meters takes a lot of human resources, and collecting data from large-scale sensors via wires is very expensive. Wireless networks provide convenient and low-cost solutions for large-scale information collection and distribution. Wireless Smart Metering Utility Network based on IEEE 802.15.4g that operates in any of the regionally available license exempt frequency bands is one of wireless efforts to enable large-scale information collecting from smart meters. The IEEE 802.11ah task group also focuses on developing next generation wireless local network standard to meet the requirements of large-scale information collecting and distributing.

Link adaptation can adapt modulation and coding scheme (MCS) according to time-varying channel conditions to increase throughput of a system. Link adaptation can be supported via a request and feedback process. For example, the transmitting device sends an MCS request and the receiving device sends an MCS feedback. Since different receiving device implementations can have different receiver sensitivity levels, the receiving device typically can make more accurate decision regarding the appropriate MCS to be used based on the channel conditions. However, the process of request and feedback for link adaptation requires extra hand shaking. It introduces significant overhead and power consumption.

One important feature of wireless meter/sensor networks is that the data traffic is in very low duty cycle and in very small packet size. For example, data from meters or sensors may be collected in every few minutes, hours or days. In addition, most transmissions from meters or sensors to AP may be just a single packet transmission. For communications with such low duty cycles and small packet size, it is important to reduce overhead caused by hand-shaking protocols or slowly converged protocols to improve efficiency and to save power. Another important feature of wireless meter/sensor networks is that the wireless meter/sensor devices are generally battery powered and those batteries need to sustain the devices for multiple years of life. Efficient power control scheme is thus very important. First, power control can save a lot of transmit power (also total power consumption). Second, power control also helps reduce the interference to other overlapping BSSs. In large BSS, interference among overlapping BSSs is a major issue that limits the network throughput and efficiency. Based on the above observation, a fast link adaptation and efficient transmit power control scheme is highly desired. US 2007/0291829 A1 discloses that Link adaptation control performs MCS selection on the basis of reception quality, e.g., an SINR (Signal to Interference and Noise Ratio), RSSI (Received Signal Strength Indicator), or PER (Packet Error Rate).

US 2007/268859 A1 discloses that the information of the channel collected by the network infrastructure includes a neighboring channel list of each channel, i.e., neighboring channel set, the workload and the QoS support capability of each channel, the sensitivity and the transmission power of each channel on the network infrastructure.

SUMMARY

An open-loop fast link adaptation scheme is proposed in an OFDM system. An access point (AP) first transmits a downlink packet comprising an open-loop link metric to a wireless station. The open-loop link metric contains a transmit power of the downlink packet plus a receiver sensitivity of the access point. The wireless station measures a received signal strength indication (RSSI) value of the downlink packet. The wireless station then applies open-loop link adaptation and determines a modulation and coding scheme (MCS) based on the open-loop link metric and the RSSI value. The wireless station then transmits an uplink packet using the determined MCS. The open-loop link adaptation scheme is especially suitable for smart meter/sensor networks as it reduces overhead and increases link capacity.

In one embodiment, the open-loop link adaptation is followed by a close-loop link adaptation and transmit power control scheme. After the AP successfully receives the first uplink transmission, it inserts a close-loop link metric (CLM) into the ACK or another polling packet in the next downlink packet. The CLM is defined by the received signal strength of the uplink packet minus the receiver sensitivity of the AP. Based on the CLM, the wireless station applies close-loop link adaptation for the subsequent uplink transmission.

The OLM and CLM may be a part of PHY header, MAC header, or a specific field. In one example, an information element contains a one-byte element ID, followed by a one-byte OLM. In another example, an information element contains a one-byte element ID, followed by a one-byte link metric, which in turn contains a one-bit type field and a seven-bit OLM or CLM field. The one-bit type field indicates whether the link metric field is OLM or CLM.

Other embodiments and advantages are described in the detailed description below. This summary does not purport to define the invention. The invention is defined by the claims.

BRIEF DESCRIPTION OF THE DRAWINGS

Figure 1 illustrates an OFDM system having a wireless smart metering/sensor network in accordance with one novel aspect.

Figure 2 illustrates simplified block diagrams of an access point and a wireless station applying open-loop link adaptation in accordance with one novel aspect.

Figure 3 illustrates a procedure of an open-loop link adaptation.

Figure 4 illustrates different states of a low duty cycle station that applies fast link adaptation.

Figure 5 illustrates one embodiment of using open-loop link metric for link adaptation between an AP and a wireless station.

Figure 6 illustrates one embodiment of using both open-loop link metric and close-loop link metric for link adaptation.

Figure 7 illustrates another embodiment of using both open-loop link metric and close-loop link metric for link adaptation.

Figures 8A and 8B illustrate examples of an information element that contains open-loop link metric and/or close-loop link metric.

Figure 9 is a flow chart of a method of fast link adaptation in accordance with one novel aspect.

DETAILED DESCRIPTION

Reference will now be made in detail to some embodiments of the invention, examples of which are illustrated in the accompanying drawings.

Link adaptation is a mechanism commonly used in wireless communication systems. Under link adaptation, the modulation, coding, and other signal and protocol parameters are matched to the time-varying conditions of the underlying radio link. In Enhanced Data rates for GSM Evolution (EDGE), a rate adaptation algorithm is used to adapt the modulation and coding scheme (MCS) according to the quality of the radio channel. For example, in the case of good channel condition, a larger modulation scheme or higher code rate is used by the transmitter to increase the data rate. On the other hand, in the case of poor channel condition, a smaller modulation scheme or lower code rate is used by the transmitter to decrease the data rate. Adaptive modulation invariably requires some channel knowledge at the transmitter. Adaptive modulation systems improve rate of transmission, and/or bit error rates, by exploiting the Channel State Information (CSI) at the transmitter. Especially over fading channels that model wireless propagation environments, systems with link adaptation exhibit great performance enhancements as compared to systems that do not exploit channel knowledge at the transmitter.

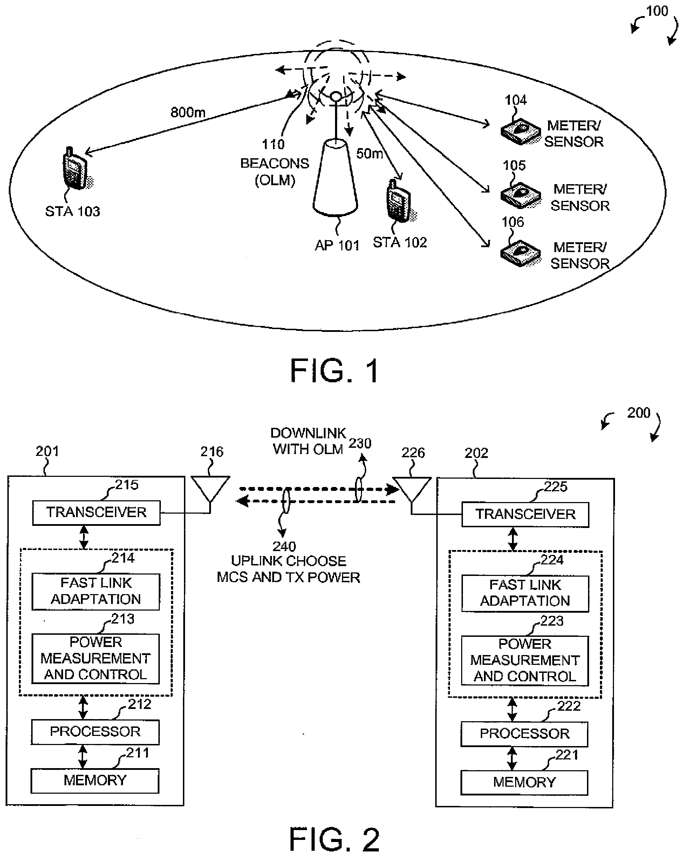

Figure 1 illustrates an Orthogonal Frequency Division Multiplexing (OFDM) system 100 having a wireless smart metering/sensor network in accordance with one novel aspect. OFDM system 100 comprises an access point AP101, a first wireless station STA102, a second wireless station STA103, and a plurality of wireless smart meters/sensors 104-106. Each wireless device (e.g. first wireless station STA102, second wireless station STA103 and wireless smart meters/sensors 104-106) communicates with AP101 via a corresponding radio link. In general, the channel condition of a radio link includes pathloss, interference due to radio signals from other transmitters, receiver sensitivity, and available transmitter power margin, etc.

In large Basic Service Set (BSS) of wireless networks, some stations are close to the AP and some stations are far away from the AP. The pathloss of different stations varies significantly. As a result, the channel condition for each different radio link also varies significantly. In the example of Figure 1, the distance between AP101 and STA102 is 50m, while the distance between AP101 and STA103 is 800m. The pathloss of STA103 is about 24dB (e.g., log2 [(800/5)*6] = 24dB) higher than the pathloss of STA102 in line-of-sight transmission. In addition to different pathloss, the channel condition for each radio link is time varying. The interference, the receiver sensitivity, and the available transmitter power margin may all vary over time due to different system configurations and network scenarios.

In order for the transmitter to exploit the channel knowledge for link adaptation, one technique is to measure the CSI directly at the receiver, and then feedback the CSI to the transmitter. For example, in a close-loop link adaptation scheme, a wireless station first sends a request to the AP, and the AP sends the transmit power and link margin back to the station. Based on the feedback, the station is then able to obtain the channel condition and apply link adaptation. Such close-loop method, however, requires hand shaking between the AP and the station thus incurs long channel-taken time. In addition, such close-loop method needs to be performed between each station and the AP. For smart meter/sensor networks, there are hundreds or thousands of devices, typically battery powered, for large-scale information collection and distribution. In addition, the data traffic is in very low duty cycle and in very small packet size. Therefore, it is especially important to save power and to reduce overhead caused by the hand shaking in such close-loop link adaptation scheme.

In one novel aspect, an open-loop fast link adaptation scheme is proposed to improve efficiency and to save power. As illustrated in Figure 1, AP101 first sends a downlink beacon or polling packet 110 to the stations including the wireless meters/sensors. The downlink beacon or polling packet comprises an open-loop link metric, which contains the receiver sensitivity and the transmit power of AP101. Upon receiving the downlink beacon or polling packet, each wireless device is then able to calculate the pathloss, and to determine a most appropriate MCS for uplink transmission.

Figure 2 illustrates simplified block diagrams of an access point AP201 and a wireless station STA202 applying open-loop fast link adaptation in accordance with one novel aspect. Access point AP201 comprises memory 211, a processor 212, a power measurement and control module 213, a fast link adaptation module 214, and a transceiver 215 coupled to antenna 216. Similarly, wireless station STA202 comprises memory 221, a processor 222, a power measurement and control module 223, a fast link adaptation module 224, and a transceiver 225 couple to antenna 226. The different modules are function modules that can be implemented by software, firmware, hardware, or any combination thereof. The function modules, when executed by the processor, allow AP201 and STA202 to apply open-loop link adaptation without extra frame exchanging overhead. For example, at AP201, transceiver 215 sends an open-loop link metric (OLM) in a downlink signal 230. At STA202, transceiver 225 receives the downlink signal, power measurement module 223 measures the signal strength of the downlink signal, fast link adaptation module 224 determines the MCS based on the open-loop link metric for uplink transmission, and transceiver 225 finally transmits an uplink signal 240 using the determined MCS.

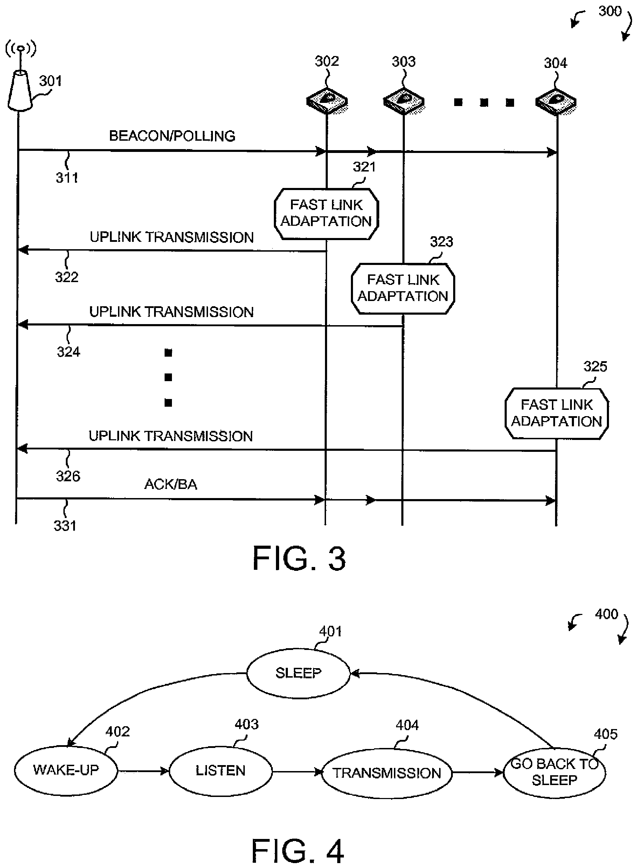

Figure 3 illustrates a procedure of an open-loop fast link adaptation scheme in a wireless network 300. Wireless network 300 comprises an AP 301 and a plurality of stations (e.g., wireless meters/sensors) 302-304. In step 311, AP 301 transmits a beacon or a polling packet in a downlink frame to the plurality of meters/sensors 302-304. The downlink frame comprises an open-loop link metric (OLM). The OLM is defined by equation (1):

$$OLM = P_{TX\_AP} + R_{SENSITIVITY\_AP} \qquad (1)$$

where

- $P_{TX\_AP}$ (dB) is the transmit power of the current packet transmitted by the AP
- $R_{SENSITIVITY\_AP}$ (dB) is the receiver sensitivity of the AP, which is the minimum received power required for decoding the lowest MCS (e.g., MCS0)

In step 321, station 302 receives the downlink packet and applies link adaptation. Station 302 first obtains the OLM from the downlink packet, and then applies link adaptation according to equation (2):

$$\Delta MCS = P_{TX\_STA} - pathloss - R_{SENSITIVITY\_AP}$$
$$= P_{TX\_STA} - (P_{TX\_AP} - RSSI_{STA}) - R_{SENSITIVITY\_AP}$$
$$= P_{TX\_STA} - (P_{TX\_AP} + R_{SENSITIVITY\_AP}) + RSSI_{STA}$$
$$= P_{TX\_STA} - OLM + RSSI_{STA} \qquad (2)$$

where

- $P_{TX\_STA}$ (dB) is the transmit power of uplink transmission by the station
- $RSSI_{STA}$ (dB) is the received signal strength indication (RSSI) of the downlink packet measured by the station

From equation (2), station 302 is able to determine ΔMCS based on the transmit power, the OLM received from the AP, and the RSSI measured by the station. Typically, if the lowest MCS level (e.g., MCS0) corresponds to a minimum received power at the AP, then the next higher MCS level (e.g., MCS1) requires more received power (e.g., 3dB more) for proper decoding by the AP. For example, if AMCS = 9dB, then station 302 may choose a MCS (e.g., MCS3) that requires 9dB more than the lowest MCS (e.g., MCS0) for proper decoding by the AP. Once station 302 determines the right MCS, it sends an uplink transmission in step 322 using the determined MCS.

Similarly, in step 323, station 303 applies link adaptation and determines the right MCS for uplink transmission in step 324. The same link adaptation scheme is repeated for all other stations including station 304 (e.g., in step 325 and 326). It can be seen that, by using open-loop link adaptation, the multiple stations are able to determine the right MCS for uplink transmission without any preceding request for channel conditions. For example, AP301 simply broadcasts its receiver sensitivity via a periodic beacon or polling packet at different time, and each station is able to select the right MCS for subsequent uplink transmission.

It should be noted that, in order to apply link adaptation with accuracy, it is important for the station to know the actual receiver sensitivity of the AP before each uplink transmission. This is because the receiver sensitivity varies over time due to several factors. First, APs made from different AP vendors have different receiver sensitivities because of different implementations and algorithms. Second, different receiver capabilities such as number of antennas, whether MRC is applied or not also affect the receiver sensitivity value. For example, AP with four antennas can have 6dB better receiver sensitivity than AP with single antenna. Third, long-term small interferences due to wide area BSS may also affect the receiver sensitivity value. With the knowledge of the actual receiver sensitivity, each station will be able to select the right MCS and ensure successful reception by the AP for each uplink packet.

Figure 4 illustrates different states of a low duty cycle meter/sensor 400 that applies open-loop fast link adaptation. The meter/sensor 400 stays in sleep mode in step 401 as its default operation mode. At certain time (e.g., once every hour or every day), the meter/sensor wakes up in step 402, and listens to downlink packets in step 403. After applying link adaptation, the meter/sensor transmits one or a few uplink packets in step 404, and then goes back to sleep in step 405. Because meter/sensor 400 has a very low duty cycle with small packet size (e.g., uplink transmission can be completed within one or a few packets), the open-loop fast link adaptation scheme is especially beneficial to avoid extra overhead of exchanging frames with the AP, to avoid re-transmissions, and to increase link capacity.

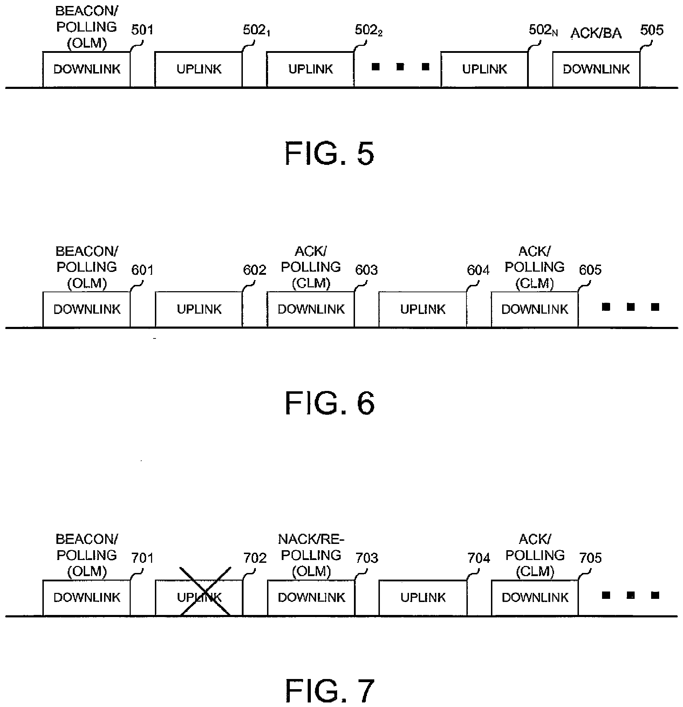

Figure 5 illustrates one embodiment of using open-loop link metric for fast link adaptation between an AP and a wireless station. The AP first transmits a downlink frame 501, which may be a beacon or a polling packet that comprises an OLM of the AP as defined by Equation (1). Upon receiving the beacon or polling packet, the wireless station applies fast link adaptation based on the received OLM. The station determines the right MCS as illustrated by Equation (2). The station then transmits an uplink frame $502_1$ using the determined MCS. If the station has more data to transmit, then it continues to transmit uplink frames $502_2$-$502_N$ in the subsequent uplink transmission using the same determined MCS. Upon receiving the uplink packet(s), the AP then sends a downlink frame 505 that comprises an acknowledgement or a block acknowledgement (BA) to multiple stations.

Figure 6 illustrates one embodiment of using both open-loop link metric and close-loop link metric for link adaptation between an AP and a wireless station. While data from meters or sensors is typically in very small packet size, other wireless devices may have large packet size that requires many consecutive uplink transmissions. In such a scenario, a close-loop link adaptation and transmit power control scheme may be used following an open-loop link adaptation. As illustrated in Figure 6, the AP first transmits a downlink frame 601, which may be a beacon or a polling packet that comprises an OLM of the AP as defined by Equation (1). Upon receiving the beacon or polling packet, the wireless station sends an uplink frame 602. The uplink frame 602, for example, may comprise a transmit power control request. After the AP successfully receives the first uplink transmission, it inserts a close-loop link metric (CLM) into the ACK or another polling packet in downlink frame 603. The CLM is defined by the following equation (3):

$$CLM = RSSI_{AP} - R_{SENSITIVITY\_AP} \qquad (3)$$

where

- $RSSI_{AP}$ is the received signal strength indication (RSSI) of the uplink packet measured by the AP
- $R_{SENSITIVITY\_AP}$ is the receiver sensitivity of the AP, which is the minimum received power required for decoding the lowest MCS

Upon receiving the downlink packet, the wireless station obtains CLM from the downlink packet. Based on the obtained CLM, the station applies link adaptation according the following equation (4):

$$\Delta MCS = P_{TX\_STA} - pathloss - R_{SENSITIVITY\_AP}$$
$$= P_{TX\_STA} - (P_{TX\_STA(PRE)} - RSSI_{AP}) - R_{SENSITIVITY\_AP}$$
$$= P_{TX\_STA} + (RSSI_{AP} - R_{SENSITIVITY\_AP}) - P_{TX\_STA(PRE)}$$
$$= P_{TX\_STA} + CLM - P_{TX\_STA(PRE)} \qquad (4)$$

where

- $P_{TX\_STA}$ is the transmit power of uplink transmission by the station (e.g., the current uplink frame 604)
- $P_{TX\_STA(PRE)}$ is the transmit power of the previous uplink transmission by the station (e.g., the previous uplink frame 602)

After determining the MCS using Equation (4), the station sends uplink frame 604 using the determined MCS. Based on Equation (4), the station may also adjust the transmit power accordingly. For example, if AMCS = $P_{TX\_STA}$ + 15, the station may decide to use a lower transmit power (e.g.,1) and a smaller MCS(e.g.,16). Alternatively, the station may decide to use a higher transmit power (e.g., 10) and a larger MCS (e.g., 25). It is up to the station to choose the right combination once it receives the link metric from the AP. This close-loop link adaptation may be repeated in the subsequent transmission until the station has completed all uplink data transmission.

Figure 7 illustrates another embodiment of using both open-loop link metric and close-loop link metric for link adaptation between an AP and a wireless station. In the example of Figure 7, the AP first sends a downlink frame 701 to the station. The downlink frame comprises an OLM of the AP inserted into a beacon or polling packet. Upon receiving the beacon or polling packet, the wireless station sends an uplink frame 702. The uplink frame 702, however, was not received by the AP successfully. The AP then sends another downlink frame 703, which is a negative acknowledgement (NACK) or a re-polling packet with OLM inserted. This time, the station applies link adaption based on the received OLM and sends uplink frame 704, which is successfully received by the AP. The AP then sends an ACK or polling packet in downlink frame 705, optionally with CLM inserted for close-loop link adaptation and transmit power control.

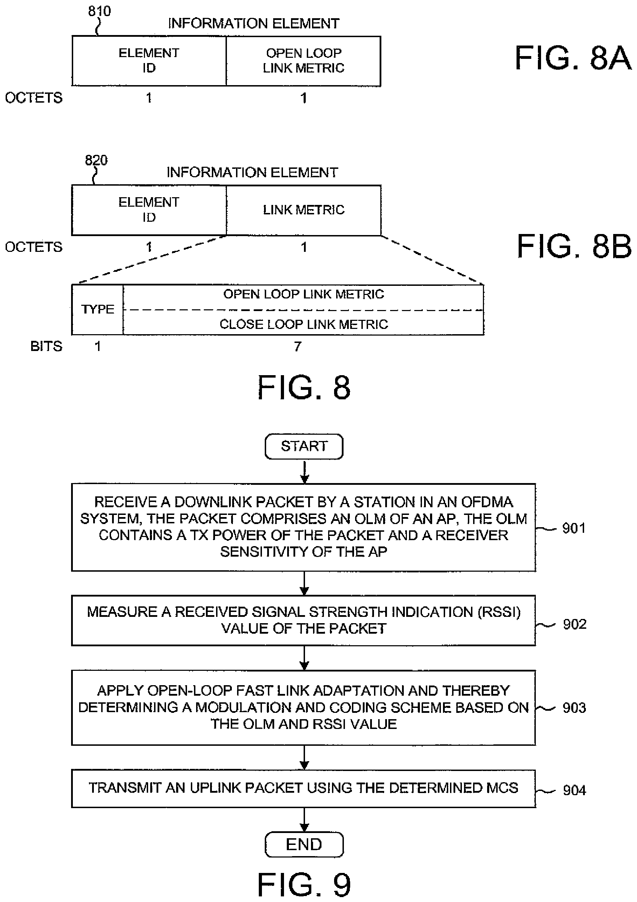

Figures 8A and 8B illustrate examples of an information element that contains open-loop link metric and/or close-loop link metric. In general, OLM and CLM could be a part of PHY header, MAC header, or a specific field. In the example of Figure 8A, information element 810 contains a one-byte element ID, followed by a one-byte OLM. A one-byte OLM provides a granularity of 0.5dB and an indication range of 128dB. The lowest link metric can vary from -127dB to 0dB. Consider the dynamic link metric range due to MCS is about 30dB (e.g., MCS0 to MCS9) and the difference of link metric due to bandwidth is about 12dB (e.g., 1MHz to 16MHz), the one-byte OLM provides sufficient range and granularity. In the example of Figure 8B, information element 820 contains a one-byte element ID, followed by a one-byte link metric field. The one-byte link metric further contains a one-bit type field and a seven-bit OLM or CLM field. The one-bit type field indicates whether the link metric field is OLM or CLM (e.g., 0 for OLM and 1 for CLM).

Figure 9 is a flow chart of a method of fast link adaptation in accordance with one novel aspect. In step 901, a wireless station receives a downlink packet comprising an open-loop link metric (OLM). The OLM contains a transmit power of the downlink packet plus a receiver sensitivity of the AP. In step 902, the wireless station measures the received signal strength indication (RSSI) value of the downlink packet. In step 903, the wireless station applies link adaptation and determines a modulation and coding scheme (MCS) based on the OLM and the RSSI value. In step 904, the wireless station transmits an uplink packet using the determined MCS.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

**Claims**

1.　A method comprising:

receiving (901) a downlink packet by a station in an orthogonal frequency division multiplexing, OFDM, system, wherein the downlink packet comprises an open-loop link metric from an access point, and wherein the open-loop link metric contains a transmit power added to a receiver sensitivity of the access point;
measuring (902) a received signal strength indication, RSSI, value of the downlink packet; and

applying (903) open-loop link adaptation and thereby determining a modulation and coding scheme, MCS, based on the open-loop link metric and the RSSI value without any preceding request for channel conditions.

2. The method of Claim 1, wherein the station belongs to a smart meter/sensor network having a plurality of meters/sensors, and wherein the same downlink packet is received by the plurality of meters/sensors for applying open-loop link adaptation.

3. The method of Claim 1 or 2, wherein the station receives the open-loop link metric from the access point without sending a preceding request to the access point.

4. The method of any of the Claims 1 to 3, further comprising:

   transmitting an uplink packet using the determined MCS; and
   receiving an acknowledgement, ACK, or a block acknowledgement, BA, from the access point.

5. The method of Claim 4, wherein the station was in sleep mode before receiving the downlink packet, and wherein the station goes back to sleep mode after transmitting the uplink packet.

6. The method of any of the Claims 1 to 5, further comprising:

   transmitting an uplink packet after receiving the downlink packet; and
   receiving a second downlink packet from the access point, wherein the second downlink packet comprises a close-loop link metric, and wherein the close-loop link metric contains a received signal strength of the uplink packet minus the receiver sensitivity of the access point.

7. The method of Claim 6, further comprising:

   applying close-loop link adaptation and thereby determining a second MCS based at least in part on the close-loop link metric; and
   transmitting a second uplink packet using the determined second MCS.

8. A wireless device, comprising:

   a receiving module (225) that receives a downlink packet in an orthogonal frequency division multiplexing, OFDM, system, wherein the packet comprises an open-loop link metric of an access point, and wherein the open-loop link metric contains a transmit power of the downlink packet added to a receiver sensitivity of the access point;
   a power measurement module (223) that measures a received signal strength indication, RSSI, value of the downlink packet; and
   a link adaptation module (224) that applies open-loop link adaptation and thereby determining a modulation and coding scheme, MCS, based on the open-loop link metric and the RSSI value without any preceding request for channel conditions.

9. The device of Claim 8, wherein the device belongs to a smart meter/sensor network having a plurality of smart meters/sensors, and wherein the same downlink packet is received by the plurality of meters/sensors for applying open-loop link adaptation.

10. The device of Claim 8 or 9, wherein the device receives the open-loop link metric from the access point without sending a preceding request to the access point.

11. The device of any of the Claims 8 to 10, further comprising:

   a transmitting module that transmit an uplink packet using the determined MCS, wherein the receiving module also receives an acknowledgement or a block acknowledgement from the access point.

12. The device of Claim 11, wherein the device was in sleep mode before receiving the downlink packet, and wherein the device goes back to sleep mode after transmitting the uplink packet.

13. The device of any of the Claims 8 to 12, further comprising:

a transmitting module that transmits an uplink packet after receiving the downlink packet, wherein the receiving module receives a second downlink packet comprising a close-loop link metric, and wherein the close-loop link metric contains a received signal strength of the uplink packet minus the receiver sensitivity of the access point.

14. The device of Claim 13, wherein the link adaptation module applies close-loop link adaptation and thereby determining a second MCS based at least in part on the close-loop link metric, and wherein the transmitting module transmits a second uplink packet using the determined second MCS.

15. A method, comprising:

transmitting a downlink packet from an access point to a plurality of stations in an orthogonal frequency division multiplexing, OFDM, system, wherein the downlink packet comprises an open-loop link metric containing a transmit power of the packet plus a receiver sensitivity of the access point; and
receiving an uplink packet from one of the stations, wherein the uplink packet is transmitted using a modulation and coding scheme, MCS, determined based at least in part on the open-loop link metric without any preceding request for channel conditions.

16. The method of Claim 15, wherein the access point transmits the open-loop link metric without receiving any preceding request from the stations.

17. The method of Claims 15 or 16, further comprising:

transmitting an acknowledgement, ACK, or a block acknowledgement, BA, to the plurality of stations.

18. The method of any of the Claims 15 to 17, wherein the plurality of stations belongs to a smart meter/sensor network, and wherein the same downlink packet is transmitted to the plurality of stations for applying open-loop link adaptation.

19. The method of any of the Claims 15 to 18, further comprising:

measuring a received signal strength of the uplink packet by the access point; and
transmitting a second downlink packet from the access point, wherein the second downlink packet comprises a close-loop link metric, and wherein the close-loop link metric contains the received signal strength of the uplink packet minus the receiver sensitivity of the access point.

20. The method of Claim 19, further comprising:

receiving a second uplink packet, wherein the second uplink packet is transmitted using a second MCS determined based at least in part on the close-loop link metric.

**Patentansprüche**

1. Ein Verfahren, umfassend:

Empfangen (901) eines Downlink-Pakets durch eine Station in einem orthogonalen Frequenz-Teitungs-Multiplexing, OFDM, System, wobei das Downlink- Paket eine Open- Loop- Link- Metrik von einem Zugangspunkt umfasst, und wobei die Open- Loop- Link- Metrik eine Sendeleistung enthält, die zu einer Empfängerempfindlichkeit des Zugangspunkts addiert wird;
Messen (902) eines empfangenen Signalstärkeanzeige- /Received Signal Strength-, RSSI, Werts des Downlink-Pakets; und
Anwendung von (903) Open- Loop- Link- Anpassung und dadurch Bestimmung eines Modulations- und Kodierungsschemas, MCS, basierend auf der Open- Loop- Link- Metrik und dem RSSI- Wert ohne vorherige Anforderung von Kanalbedingungen.

2. Das Verfahren nach Anspruch 1, wobei die Station zu einem intelligenten Zähler- /Sensometzwerk gehört, das eine Vielzahl von Zählern/Sensoren aufweist, und wobei dasselbe Downlink- Paket von der Vielzahl von Zählern/Sensoren empfangen wird, um eine Open- Loop- Link- Adaption anzuwenden.

3. Das Verfahren nach Anspruch 1 oder 2, wobei die Station die Open- Loop- Link- Metrik vom Zugangspunkt empfängt, ohne eine vorhergehende Anforderung an den Zugangspunkt zu senden.

4. Das Verfahren eines der Ansprüche 1 bis 3, ferner umfassend:

Senden eines Uplink- Pakets unter Verwendung des ermittelten MCS; und
Empfangen einer Bestätigung, ACK, oder einer Blockbestätigung, BA, vom Zugangspunkt.

5. Das Verfahren nach Anspruch 4, wobei sich die Station vor dem Empfang des Downlink- Pakets im Schlafmodus befand, und wobei die Station nach dem Senden des Uplink- Pakets in den Schlafmodus zurückkehrt.

6. Das Verfahren eines der Ansprüche 1 bis 5, ferner umfassend:

Übertragen eines Uplink- Pakets nach Empfang des Downlink- Pakets; und
Empfangen eines zweiten Downlink- Pakets von dem Zugangspunkt, wobei das zweite Downlink- Paket eine Close- Loop- Link- Metrik umfasst, und wobei die Close- Loop- Link- Metrik eine empfangene Signalstärke des Uplink- Pakets abzüglich der Empfängerempfindlichkeit des Zugangspunkts enthält.

7. Das Verfahren nach Anspruch 6, das weiterhin Folgendes umfasst:

Anwendung der Close- Loop- Link-Anpassung und dadurch Bestimmung eines zweiten MCS, der zumindest teilweise auf der Close- Loop- Link- Metrik basiert; und
Senden eines zweiten Uplink- Pakets unter Verwendung des ermittelten zweiten MCS.

8. Ein drahtloses Gerät, umfassend:

ein Empfangsmodul (225), das ein Downlink- Paket in einem OFDM- System (Orthogonal Frequency Division Multiplexing) empfängt, wobei das Paket eine Open- Loop- Link- Metrik eines Zugangspunkts umfasst, und wobei die Open- Loop- Link- Metrik eine Sendeleistung des Downlink- Pakets enthält, die zu einer Empfängerempfindlichkeit des Zugangspunkts addiert wird;
ein Leistungsmessmodul (223), das einen empfangenen Signalstärkeanzeige-, RSSI, Wert des Downlink- Pakets misst; und
ein Linkadaptionsmodul (224), das eine Open- Loop- Link- Anpassung anwendet und dadurch ein Modulations- und Kodierungsschema, MCS, bestimmt, das auf der Open- Loop- Link- Metrik und dem RSSI- Wert basiert, ohne vorhergehende Anforderung von Kanalbedingungen.

9. Die Vorrichtung nach Anspruch 8, wobei die Vorrichtung zu einem Smart- Meter/Sensor- Netzwerk gehört, das eine Vielzahl von Smart- Metern/Sensoren aufweist, und wobei dasselbe Downlink- Paket von der Vielzahl von Zählern/Sensoren empfangen wird, um eine Open- Loop- Link- Adaption anzuwenden.

10. Die Vorrichtung nach Anspruch 8 oder 9, wobei die Vorrichtung die Open- Loop- Link- Metrik vom Zugangspunkt empfängt, ohne eine vorhergehende Anforderung an den Zugangspunkt zu senden.

11. Die Vorrichtung einer der Ansprüche 8 bis 10, ferner umfassend: ein Sendemodul, das ein Uplink- Paket unter Verwendung des ermittelten MCS sendet, wobei das Empfangsmodul auch eine Quittung oder eine Blockquittung von dem Zugangspunkt empfängt.

12. Die Vorrichtung nach Anspruch 11, wobei sich die Vorrichtung vor dem Empfang des Downlink- Pakets im Schlafmodus befand, und wobei die Vorrichtung nach dem Senden des Uplink- Pakets in den Schlafmodus zurückkehrt.

13. Die Vorrichtung eines der Ansprüche 8 bis 12, ferner umfassend: ein Sendemodul, das ein Uplink- Paket sendet, nachdem es das Downlink- Paket empfangen hat, wobei das Empfangsmodul ein zweites Downlink-Paket empfängt, das eine Close- Loop- Link- Metrik umfasst, und wobei die Close- Loop- Link- Metrik eine empfangene Signalstärke des Uplink- Pakets minus der Empfängerempfindlichkeit des Zugangspunkts enthält.

14. Die Vorrichtung nach Anspruch 13, wobei das Link- Adaptionsmodul eine Close- Loop- Link- Adaption anwendet und dadurch ein zweites MCS bestimmt, das zumindest teilweise auf der Close- Loop- Link- Metrik basiert, und wobei das Sendemodul ein zweites Uplink- Paket unter Verwendung des ermittelten zweiten MCS sendet.

**15.** Das Verfahren, umfassend:

Übertragen eines Downlink- Pakets von einem Zugangspunkt zu einer Vielzahl von Stationen in einem orthogonalen Frequenzteilungs-Multiplexing-, OFDM, System, wobei das Downlink- Paket eine Open- Loop- Link-Metrik umfasst, die eine Sendeleistung des Pakets plus eine Empfängerempfindlichkeit des Zugangspunkts enthält; und Empfangen eines Uplink- Pakets von einer der Stationen, wobei das Uplink- Paket unter Verwendung eines Modulations- und Codierungsschemas, MCS, übertragen wird, das zumindest teilweise auf der Open- Loop- Link- Metrik basiert, ohne vorhergehende Anforderung von Kanalbedingungen.

**16.** Das Verfahren nach Anspruch 15, bei dem der Zugangspunkt die Metrik der Open- Loop- Verbindung überträgt, ohne vorhergehende Anforderung von den Stationen zu erhalten.

**17.** Das Verfahren nach Anspruch 15 oder 16, ferner umfassend: Übertragen einer Quittung, ACK, oder einer Blockquittung, BA, an die Vielzahl von Stationen.

**18.** Das Verfahren nach einem der Ansprüche 15 bis 17, wobei die Vielzahl von Stationen zu einem intelligenten Zähler-/Sensornetzwerk gehört, und wobei dasselbe Downlink- Paket an die Vielzahl von Stationen übertragen wird, um eine Open- Loop- Link-Adaption durchzuführen.

**19.** Das Verfahren für einen der Ansprüche 15 bis 18, das ferner umfasst:

Messen einer empfangenen Signalstärke des Uplink- Pakets durch den Zugangspunkt; und
Senden eines zweiten Downlink- Pakets von dem Zugangspunkt, wobei das zweite Downlink- Paket eine Close-Loop- Link- Metrik umfasst, und wobei die Close- Loop- Link- Metrik die empfangene Signalstärke des Uplink-Pakets abzüglich der Empfängerempfindlichkeit des Zugangspunkts enthält.

**20.** Das Verfahren nach Anspruch 19, das weiterhin Folgendes umfasst:

Empfangen eines zweiten Uplink- Pakets, wobei das zweite Uplink- Paket unter Verwendung eines zweiten MCS übertragen wird, das zumindest teilweise auf Basis der Close- Loop- Link- Metrik bestimmt wurde.

**Revendications**

**1.** Un procédé comprenant:

la réception (901) d'un paquet de liaison descendante par une station dans un système de multiplexage par répartition de fréquence orthogonale, OFDM, un système dans lequel le paquet descendant comporte une métrique de liaison en boucle ouverte d'un point d'accès, et dans lequel la métrique de liaison en boucle ouverte comporte une puissance de transmission ajoutée à une sensibilité de réception du point d'accès ;
la mesure (902) d'un indicateur de la force du signal reçu, RSSI, valeur du paquet de liaison descendante ; et
l'application (903) d'une adaptation de liaison en boucle ouverte et par suite la détermination d'un schéma de modulation et de codage, MCS, sur la base de la métrique de liaison en boucle ouverte et de la valeur RSSI sans aucune requête précédente relatives à des conditions de canal.

**2.** Le procédé de la revendication 1, dans lequel la station appartient à un réseau de compteurs/capteurs intelligents ayant une pluralité de compteurs/mesureurs, et dans lequel le même paquet en liaison descendante est reçu par la pluralité de compteurs/ captéurs pour appliquer une adaptation de liaison en boucle ouverte.

**3.** Le procédé de la revendication 1, dans lequel la station reçoit la métrique de liaison en boucle ouverte depuis le point d'accès sans envoi de requête préalable au point d'accès.

**4.** Le procédé de la revendication 1, comprenant en outre:

la transmission d'un paquet de liaison montante en utilisant le MCS déterminé; et

la réception d'un accusé de réception, ACK, ou un accusé de réception de bloc, BA, émanant du point d'accès.

5. Le procédé de la revendication 4, dans lequel la station était en mode veille avant de recevoir le paquet de liaison descendante, et dans lequel la station revient en mode veille à la suite de la transmission du paquet de liaison montante.

6. Le procédé de l'une quelconque des revendications 1 à 5, comprenant en outre,
la transmission d'un paquet de liaison montante à la suite de la réception du paquet de liaison descendante; et
la réception d'un second paquet de liaison descendante émanant du point d'accès, dans lequel le second paquet de liaison descendante comprend une métrique de liaison en boucle fermée, et dans lequel la métrique de liaison en boucle fermée contient une force de signal reçu du paquet de liaison montante diminuée de la sensibilité de réception du point d'accès.

7. Le procédé de la revendication 6, comprenant en outre:

l'application d'une adaptation de liaison en boucle fermée et ainsi la détermination d'une seconde MCS basée au moins en partie sur la métrique de liaison en boucle fermée; et
la transmission d'un second paquet montant en utilisant le deuxième MCS déterminé.

8. Un dispositif sans fil, comprenant:

un module de réception (225) qui reçoit un paquet de liaison descendante dans un système de multiplexage par répartition orthogonale de fréquences, OFDM, dans lequel le paquet comprend une métrique de liaison en boucle ouverte d'un point d'accès; et dans lequel la métrique de liaison en boucle ouverte comporte une puissance de transmission du paquet en liaison descendante ajoutée à une sensibilité de réception du point d'accès ;
un module de mesure de puissance (223) qui mesure un indicateur de force de signal reçu, RRSI, valeur du paquet de liaison descendante ; et
un module d'adaptation de liaison (224) qui applique une adaptation de liaison en boucle ouverte et par la suite une détermination d'un schéma de codage et de modulation, MCS, sur la base de la métrique de liaison en boucle ouverte et de la valeur RRSI sans requête préalable pour des conditions de canal.

9. Le dispositif de la revendication 8, dans lequel le dispositif appartient à un réseau de compteurs / capteurs intelligents ayant une pluralité de compteurs / capteurs intelligents, et dans lequel le même paquet de liaison descendante est reçu par la pluralité de compteurs / capteurs pour l'application d'une adaptation de liaison en boucle ouverte.

10. Le dispositif selon la revendication 8, dans lequel le dispositif reçoit la métrique de liaison en boucle ouverte depuis le point d'accès sans l'envoi de requête préalable au point d'accès.

11. Le dispositif de l'une quelconque des revendications 8 à 10, comprenant en outre, un module d'émission qui transmet un paquet de liaison montante en utilisant le MCS déterminé, dans lequel le module de réception reçoit également un accusé de réception ou un accusé de réception de bloc émanant du point d'accès.

12. Le dispositif selon la revendication 11, dans lequel le dispositif était en mode veille avant de recevoir le paquet de liaison descendante, et dans lequel le dispositif retourne au mode veille à la suite de la transmission du paquet montant.

13. Le dispositif selon l'une quelconque des revendications 8 à 12, comprenant en outre :

un module de transmission qui transmet un paquet de liaison montante à la suite de la réception du paquet en liaison descendante, dans lequel le module de réception reçoit un second paquet de liaison descendante comprenant une métrique de liaison en boucle fermée, et dans lequel la métrique de liaison en boucle fermée contient une force du signal reçu du paquet en liaison montante diminuée de la sensibilité de réception du point d'accès.

14. Le dispositif de la revendication 13, dans lequel le module d'adaptation de liaison applique une adaptation de liaison en boucle fermée et détermine ainsi une seconde MCS basée au moins en partie sur la métrique de liaison en boucle fermée, et dans lequel le module de transmission transmet un second paquet en liaison montante en utilisant le second MCS.

**15.** Un procédé comprenant:

la transmission d'un paquet en liaison descendante d'un point d'accès à une pluralité de stations dans un système de multiplexage par répartition orthogonale de fréquences, OFDM, dans lequel le paquet en liaison descendante comprend une métrique de liaison en boucle ouverte contenant une puissance d'émission du paquet du point d'accès ajoutée à une sensibilité de réception du point d'accès ; et

la réception d'un paquet de liaison montante provenant de l'une des stations, dans lequel le paquet de liaison montante est transmis en utilisant un schéma de modulation et de codage, MCS, déterminé en fonction au moins en partie de la métrique de liaison en boucle ouverte sans aucune requête préalable relative à des conditions de canal.

**16.** Le procédé de la revendication 15, dans lequel le point d'accès transmet la métrique de liaison en boucle ouverte sans recevoir aucune demande préalable de la part des stations.

**17.** Le procédé de la revendication 15 ou 16, comprenant en outre :

la transmission d'un accusé de réception, ACK, ou d'un accusé de réception de bloc, BA, à la pluralité de stations.

**18.** Le procédé de l'une quelconque des revendications 15 à 17, dans lequel la pluralité de stations appartient à un réseau de capteurs/compteurs intelligent, et dans lequel le même paquet en liaison descendante est transmis à la pluralité de stations pour l'application d'une adaptation de lien en boucle ouverte.

**19.** Le procédé de l'une quelconque des revendications 15 à 18, comprenant en outre :

la mesure d'une force du signal reçu du paquet en liaison montante par le point d'accès ; et
la transmission d'un second paquet en liaison descendante du point d'accès, dans lequel le second paquet en liaison descendante comprend une métrique de liaison en boucle fermée, et dans lequel la métrique de liaison en boucle fermée comporte la force du signal reçu du paquet en liaison montante diminuée de la sensibilité du point d'accès.

**20.** Le procédé de la revendication 19, comprenant en outre :

la réception d'un second paquet en liaison montante, dans lequel le second paquet en liaison montante est transmis en utilise un second MCS déterminé sur la base d'au moins partiellement la métrique de liaison en boucle fermée.

EP 2 684 399 B1

FIG. 1

FIG. 2

FIG. 1

FIG. 2

FIG. 3

FIG. 4

BEACON/
POLLING    501                502₁                502₂                            502ₙ   ACK/BA    505
(OLM)

| DOWNLINK | UPLINK | UPLINK | ■ ■ ■ | UPLINK | DOWNLINK |

## FIG. 5

BEACON/                                ACK/                              ACK/
POLLING    601                602   POLLING    603            604   POLLING    605
(OLM)                              (CLM)                            (CLM)

| DOWNLINK | UPLINK | DOWNLINK | UPLINK | DOWNLINK | ■ ■ ■ |

## FIG. 6

BEACON/                                NACK/RE-                          ACK/
POLLING    701                702   POLLING    703            704   POLLING    705
(OLM)                              (OLM)                            (CLM)

| DOWNLINK | UPLINK | DOWNLINK | UPLINK | DOWNLINK | ■ ■ ■ |

## FIG. 7

810

INFORMATION ELEMENT

| ELEMENT ID | OPEN LOOP LINK METRIC |
|:---:|:---:|

OCTETS       1                  1

# FIG. 8A

820

INFORMATION ELEMENT

| ELEMENT ID | LINK METRIC |
|:---:|:---:|

OCTETS       1                  1

# FIG. 8B

| TYPE | OPEN LOOP LINK METRIC |
|:---:|:---:|
| | CLOSE LOOP LINK METRIC |

BITS      1                 7

# FIG. 8

START

RECEIVE A DOWNLINK PACKET BY A STATION IN AN OFDMA SYSTEM, THE PACKET COMPRISES AN OLM OF AN AP, THE OLM CONTAINS A TX POWER OF THE PACKET AND A RECEIVER SENSITIVITY OF THE AP     ⌐ 901

MEASURE A RECEIVED SIGNAL STRENGTH INDICATION (RSSI) VALUE OF THE PACKET     ⌐ 902

APPLY OPEN-LOOP FAST LINK ADAPTATION AND THEREBY DETERMINING A MODULATION AND CODING SCHEME BASED ON THE OLM AND RSSI VALUE     ⌐ 903

TRANSMIT AN UPLINK PACKET USING THE DETERMINED MCS     ⌐ 904

END

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61452056 A
- US 20070291829 A1
- US 2007268859 A1